# EUROPÄISCHE PATENTSCHRIFT

(11) **EP 2 570 451 B1**
(45) Veröffentlichungstag und Bekanntmachung des Hinweises auf die Patenterteilung: **29.05.2013**
(21) Anmeldenummer: 11181686.4
(22) Anmeldetag: 16.09.2011
(51) Int. Cl.: C08J 5/00

(54) **Verfahren zum Herstellen von Polymeren in mikrofeiner Form, insbesondere Faktis, vorzugsweise auf Basis nachwachsender Rohstoffe**
Method for producing polymers in micro-fine form, in particular factice, preferably on the basis of sustainable raw materials
Procédé de fabrication de polymères en forme microfine, notamment un factice, de préférence à base de matières brutes repoussantes

(43) Veröffentlichungstag der Anmeldung: 20.03.2013
(73) Patentinhaber: DOG deutsche Oelfabrik Gesellschaft für chemische Erzeugnisse m.b.H & Co. KG, 20457 Hamburg (DE)
(72) Erfinder: Oettlein, Stefan, 22846 Norderstedt (DE); Müller, Stephan, 22047 Hamburg (DE)
(74) Vertreter: Raffay & Fleck

(56) Entgegenhaltungen:
- SU-A1- 1 689 339

## Beschreibung

Die Erfindung betrifft ein Verfahren zum Herstellen von Polymeren (Faktis) vorzugsweise auf Basis nachwachsender in mikrofeiner Form.

Bei Faktis handelt es sich um sog. Ölkautschuk, einem gummiartigen Werkstoff, der durch Vernetzung ungesättigter Pflanzenöle, in Europa vor allem aus Raps- und Rizinusöl hergestellt wird.

Die SU 1 689 339 A1 beschreibt eine Polymer-Mineralzusammensetzung, die als Weichmacher für Gummimischungen unter dem Namen "Faktis" im Handel ist. Die beschriebene Zusammensetzung ist gegenüber verschiedenen Pilzarten widerstandsfähig und lässt sich bei der Konstruktion dreischichtiger Fußbodenpaneele in Tierfarmgebäuden einsetzen. Es werden Partikelgrößen in D1 von 0,63 bis 2,5 mm erwähnt, die nach Umrechnung 630 bis 2500 µm betragen.

Die Anmelderin selbst hat jahrzehntelange Erfahrung mit der Vernetzung fetter Öle, deren Polymerisationsprodukte dann zerkleinert, zerrieben und/oder vermahlen werden. Bekanntermaßen werden Faktisse als Pulver oder in lösemittelhaltigen Systemen als Additive in Farben und Lacken eingesetzt, um die haptischen Eigenschaften wie Soft-Feel oder Antirutsch zu verbessern. Darüber hinaus fungiert Faktis als Füllstoff in Elastomer-Bauteilen wie beispielsweise Profile, Druckwalzen oder Radiergummis.

Insbesondere Softfeel-Lacke gibt es für die unterschiedlichsten Untergründe und Einsatzbereiche. Untergründe können z.B. Kunststoffe (Interieur,...), Holz (Möbelindustrie: Stuhllehnen,...), Glas (Haushaltswaren,...) oder Metall (Mobiltelefon,...) sein. Sie basieren im allgemeinem auf weichen Polyurethanlacken, PUR-Silikonmischungen, modifizierten Wachsen, Polyharnstoff oder einer Mischung dieser Systeme. In ihrer farblichen Gestaltung sind sie frei wählbar. Durch eine breite Rohstoffauswahl können viele Einsatzgebiete mit solchen Beschichtungen ausgestattet werden. Eine Aufgabe der Erfindung ist es, Softfeel- oder Softtouch-Eigenschaften, sowie Mattierung über völlig neue Stoffsysteme zu ermöglichen, in denen nahezu sämtliche Edukte aus nachwachsenden Rohstoffen zum Einsatz kommen und die als Additiv einen gewissen Anteil an mikrofeinem Faktis aufweisen.

So sind auch schon verschiedene Faktisse bekannt, deren Herstellungsverfahren zu Korngrößen von < 500 *µ*m oder auch < 100 *µ*m führen. Ziel der Anmelderin ist es ferner weitere, neue Herstellungsverfahren für Faktis zu schaffen, mit denen die Korngröße und/oder ihre Verteilung beeinflusst werden können, erstere noch weiter zu verringern, um eventuell noch bessere Softtouch- oder Softfeel-Ergebnisse zu erschließen, ihre bisherigen Eigenschaften zu verbessern oder den Faktis-Additivanteil im eingesetztem Produktgemisch bei gleicher Wirkung zu verkleinern.

Überraschenderweise wird dieses Ziel bzw. diese Aufgabe durch das Verfahren gemäß Anspruch 1 gelöst.

Als flüssiges Medium kommt insbesondere ein Lösungsmittel in Frage. Dabei kann es sich auch um Wasser handeln. Vorteilhafterweise wird insbesondere ein Lacklösemittel eingesetzt. Durch dieses Verfahren kann eine Korngrößenverteilung im Bereich bis 50 *µ*m, insbesondere mit 95 % der Faktis-Partikelmasse im Bereich von 1 bis 40 *µ*m erzielt werden. Derartiger Faktis kann mit einem Anteil von weniger als 20 Gew.% an der Gesamtzusammensetzung mit Bindemittel(n), Pigmenten, Füllstoffen, Lösemitteln, Katalysatoren und/oder Härtern sowie weiteren Additiven zu hervorragenden Softtouch-Ergebnissen z.B. bei Decklacken und Klarlacken auf diversen metallischen und nichtmetallischen Substraten ABS führen.

Diese Verfahrenserfindung schafft somit einen Lack, aufweisend Faktis mit einer Korngrößenverteilung, die eine mittlere Korngröße (D₅₀) des Faktis < 30 *µ*m, insbesondere < 10 *µ*m aufweist. Mit Vorteil ist der Faktis-Anteil < 20 Gew. % des Lacks. Mit besonderem Vorteil weisen 95% des Faktis, insbesondere das gesamte Faktis, eine Korngröße von < 30 *µ*m, insbesondere < 10 *µ*m, insbesondere < 4 *µ*m, auf.

Solche Lacke werden insbesondere als Softtouch-Lacke ausgeführt und eignen sich besonders als Decklacke.

Mit Vorteil wird Faktis, hergestellt durch das geschilderte erfindungsgemäße Herstellungsverfahren, in dem Lack verwendet. Somit weist der Lack vorteilhafterweise ein erfindungsgemäß hergestellten Faktis auf.

Mit besonderem Vorteil wird das Verfahren zur Herstellung des Faktis solange durchgeführt bzw. die Durchführung durch den Homogenisator solange wiederholt, bis die mittlere Korngröße (D₅₀) des Faktis < 30 *µ*m, insbesondere < 10 *µ*m, ist.

Ein solcher Faktis ist besonders hochwertig und kann zur Erzielung besonderer Effekte, beispielsweise besonderer Softtouch-Effekte eingesetzt werden. Die Wiederholung der Durchführung durch den Homogenisator ist besonders effizient und ermöglicht die Herstellung eines derartigen Faktis.

Dabei kann die Anzahl der Durchführungen auf Erfahrung basieren oder jedes Mal durch eine entsprechende Messung der Korngrößenverteilung bestimmt werden.

Mit Vorteil wird die Durchführung dabei so oft wiederholt, bis mindestens 95% des Faktis, insbesondere die gesamte Faktis-Masse, eine Korngröße von < 30 *µ*m, insbesondere < 10 *µ*m, insbesondere < 4 *µ*m, aufweist. Eine derartige Verteilung, bei der die maximale Partikelgröße deutlich reduziert bzw. beschränkt ist, ermöglicht eine besonders homogene Faktis-Masse, die zur Erzielung besonderer Effekte besonders effizient eingesetzt werden kann. Sie lässt sich darüber hinaus besonders gut verarbeiten.

Mit Vorteil wird die Dispersion während der Homogenisierung, insbesondere zwischen den einzelnen Durchführungen durch den Homogenisator, insbesondere im Gegenstromprinzip, gekühlt. Durch die Homogenisierung wird Energie in die Dispersion eingetragen. Dies kann zu Problemen, insbesondere beim Einsatz entsprechend kritischer flüssiger Medien führen. Darüber hinaus kann dies auch die Effizienz der Homogenisierung beeinträchtigen. Aus diesem Grund wird vorteilhafterweise eine Kühlung vorgesehen. Diese kann sowohl im Homogenisator selbst oder auch zwischen den einzelnen Durchführungen erfolgen. Vorteilhafterweise wird die Kühlung so durchgeführt, dass die Dispersion konstant eine Temperatur unterhalb von 100 °C aufweist, insbesondere unterhalb des Siedepunktes des flüssigen Mediums.

Mit Vorteil wird die Dispersion, die zur Durchführung des Verfahrens bereitgestellt wird, so gewählt, dass ausschließlich Faktis-Pulver mit einer mittleren Korngröße von weniger als 100 *µ*m, insbesondere weniger als 80 *µ*m, und dem flüssigen Medium besteht. Dabei handelt es sich vorteilhafterweise bei dem flüssigen Medium um ein organischen Lösemittel.

Dadurch, dass keine weiteren Bestandteile vorliegen, kann eine besonders reine Herstellung vorgenommen werden.

Vorteilhafterweise wird als flüssiges Medium ein solches gewählt, das bei mindestens einer Temperatur zwischen 20 und 100°C flüssig ist. Vorteilhafterweise ist das Medium auch über eine Temperaturspanne von mindestens 10, insbesondere mindestens 50°C, innerhalb der Temperaturspanne von 20 bis 100°C flüssig. Ein solches Medium lässt sich bei vorteilhaften Temperaturen der Homogenisierung besonders leicht verwenden.

Mit besonderem Vorteil wird die Bereitstellung der Dispersion dadurch erreicht, dass Faktis in gummiartiger oder fester Form in einer, insbesonderen mehrstufigen, Vermahlung zerkleinert und anschließend in dem flüssigen Medium dispergiert wird. Durch eine solche Vorgehensweise kann klassisches Faktis, das in der Regel als Festkörper in fester oder gummiartiger Form vorliegt, als Ausgangsstoff für das erfindungsgemäße Verfahren verwendet werden. Dabei findet die Vermahlung derart statt, dass die Anforderungen an die Korngröße erfüllt sind.

Alternativ kann auch Faktis mit entsprechender Korngröße verwendet und entsprechend dispergiert werden.

In einer weiteren Ausführungsform der Erfindung erfolgt die Bereitstellung der Dispersion derart, dass in dem flüssigen Medium, insbesondere ausgehend von einer Emulsion, insbesondere Öl in Wasser, insbesondere Rizinusölemulsion, eine Faktis-Polymerisation zur Bildung des Faktis-Pulvers durchgeführt wird. Diese Polymerisation wird insbesondere innerhalb eines Homogenisators, insbesondere in dem Homogenisator, in dem auch die erfindungsgemäße Homogenisierung stattfindet, durchgeführt. Bei einer solchen Verfahrensführung ist es nicht unbedingt notwendig, dass zunächst eine Korngröße oberhalb von 30 *µ*m polymerisiert wird. Es ist auch möglich, die Homogenisierung zur Erzeugung der erfindungsgemäßen Edukte kombiniert mit der Polymerisation ablaufen zu lassen, so dass durch die zeitgleiche Homogenisierung bereits unmittelbar bei der Polymerisation die erfindungsgemäßen Edukte erzeugt werden. Dies ist jedoch nicht zwingend erforderlich. Die Polymerisation kann auch derart ablaufen, dass zunächst Korngrößen von mehr als 30 *µ*m als mittlere Korngröße erzeugt werden. Die mittlere Korngröße sollte jedoch immer unterhalb von 100 *µ*m liegen. Anschließend erfolgt dann eine erfindungsgemäße Homogenisation unter mehrfacher Durchführung durch den Homogenisator.

Die Polymerisation kann dabei bei einem einfachen Aufenthalt in den Homogenisator bzw. einer Passage durch den Homogenisator durchgeführt werden oder auch während mehrfacher Durchführung durch den Homogenisator erfolgen.

Weitere Ausführungsmöglichkeiten sollen rein exemplarisch und nicht beschränkend an Hand der nachfolgenden Skizze gezeigt werden. Die Skizze ist rein schematisch.

Die Figur zeigt:

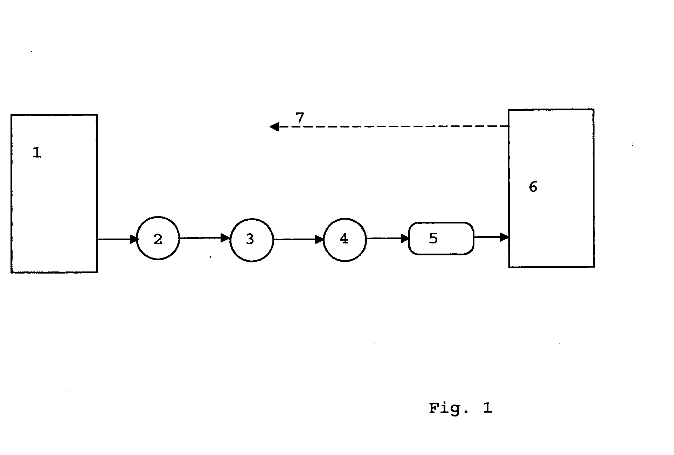

Fig. 1 einen Ablaufplan des erfindungsgemäßen Verfahrens bzw. einen entsprechenden Aufbau.
Fig.1 zeigt einen möglichen Ablauf des erfindungsgemäßen Verfahrens bzw. einen entsprechenden Aufbau.

Ausgehend von einem Behälter mit einer Dispersionsvorlage 1 wird die Dispersionsvorlage durch eine Pumpe 2 zu einer Lavaldüse 3 geführt. Über diese Lavaldüse 3 wird das Material in die Homogeniereinheit 4 eingespritzt. Nach der Passage durch die Homogenisiereinheit 4 gelangt das homogenisierte und zerkleinerte Material in einen Kühler 5 und von dort in einen Behälter mit mikrofeinem Faktis. Je nach gewünschter Feinheit wird sodann eine Rückführung für weitere Vermahlungsschritte 7 durchgeführt. Diese Rückführung kann beispielsweise in den Behälter mit einer Dispersionsvorlage 1 oder direkt zur Pumpe 2 erfolgen.

### Bezugszeichenliste

| | |
|---|---|
| 1 | Behälter mit Dispersionsvorlage |
| 2 | Pumpe |
| 3 | Lavaldüse |
| 4 | Homogeniereinheit |
| 5 | Kühler |
| 6 | Behälter mit mikrofeinem Faktis |
| 7 | Rückführung für weitere Vermahlungsschritte |

## Patentansprüche

1. Verfahren zum Herstellen von Polymeren, insbesondere Faktis, vorzugsweise basierend auf nativen Ölen, vorzugsweise peroxidisch vernetzt, in mikrofeiner Form durch Vermahlung, insbesondere zur Verwendung in der Lackindustrie,
aufweisend folgende Verfahrensschritte:
Bereitstellen einer Dispersion beinhaltend Faktis-Pulver als peroxidvernetztes Polymer und ein flüssiges Medium, vorteilsweise Lacklösemittel, insbesondere Butylacetat,
wobei die Dispersion einen Feststoffanteil von weniger als 75 Gew.%, insbesondere 50 Gew.% bis 30 Gew.%, aufweist und
wobei das Faktis-Pulver eine mittlere Korngröße (D₅₀) von weniger als 100 *µ*m, insbesondere von weniger als 80 *µ*m, aufweist,
Homogenisieren in mindestens und insbesondere einem Homogenisator mit jeweils vorgeschalteter Düse (3) unter mehrfacher Durchführung durch den oder die Homogenisator(en) (4) unter Druck, insbesondere bei 4 bis 800 bar.

2. Verfahren nach Anspruch 1, **dadurch gekennzeichnet, dass** die Durchführung durch den Homogenisator (4) so lange wiederholt wird, bis die mittlere Korngröße (D₅₀) des Faktis-Pulvers kleiner gleich 30 *µ*m, insbesondere kleiner gleich 10 *µ*m, ist.

3. Verfahren nach einem der vorstehenden Ansprüche, **dadurch gekennzeichnet, dass** die Durchführung durch den Homogenisator (4) so lange wiederholt wird, bis die mindestens 95 Prozent der Faktis-Pulvermasse, insbesondere die gesamte Faktis-Pulvermasse, eine Korngröße von kleiner gleich 30 *µ*m, insbesondere kleiner gleich 10 *µ*m, insbesondere kleiner gleich 4 *µ*m, aufweist.

4. Verfahren nach einem der vorstehenden Ansprüche, **dadurch gekennzeichnet, dass** die Dispersion während der Homogenisierung, insbesondere zwischen den einzelnen Durchführungen durch den/die Homogenisator(en) (4), insbesondere im Gegenstromprinzip, gekühlt wird.

5. Verfahren nach einem der vorstehenden Ansprüche, **dadurch gekennzeichnet, dass** die Dispersion ausschließlich aus dem Faktis-Pulver als peroxidvernetztes Polymer mit einer mittleren Korngröße (D₅₀) von weniger als 100 *µ*m, insbesondere von weniger als 80 *µ*m, und dem flüssigen Medium besteht und vorteilsweise das flüssige Medium ein (Lack-)Lösemittel ist.

6. Verfahren nach einem der vorstehenden Ansprüche, **dadurch gekennzeichnet, dass** das flüssige Medium ein solches ist, dass bei mindestens einer Temperatur zwischen 20 und 100°C flüssig ist.

7. Verfahren nach einem der vorstehenden Ansprüche, **dadurch gekennzeichnet, dass** das flüssige Medium Wasser oder eine wässrige Lösung ist.

8. Verfahren nach einem der vorstehenden Ansprüche, **dadurch gekennzeichnet, dass** das flüssige Medium Lacklösemittel oder Lacklösemittelgemische sind.

9. Verfahren nach einem der vorstehenden Ansprüche, **dadurch gekennzeichnet, dass** das flüssige Medium Bindemittel, Bindemittelgemische oder Bindemittellösungen sind.

10. Verfahren nach einem der vorstehenden Ansprüche, **dadurch gekennzeichnet, dass** zur Bereitstellung der Dispersion Faktis in gummiartiger oder fester Form in einer insbesondere mehrstufigen Vermahlung zerkleinert und anschließend in dem flüssigen Medium dispergiert wird.

11. Verfahren nach einem der vorstehenden 1 bis 6 Ansprüche, **dadurch gekennzeichnet, dass** zur Bereitstellung der Dispersion in dem flüssigen Medium, insbesondere Rizinusöl, insbesondere ausgehend von einer Emulsion, insbesondere Rizinusöl-Emulsion, eine Faktis-Polymerisation zur Bildung des Faktis-Pulvers durchgeführt wird, insbesondere innerhalb eines Homogenisators (4), insbesondere in dem Homogenisator (4).

## Claims

1. A method for manufacturing polymers, in particular factice, preferably based on native oils, preferably peroxide crosslinked, in microfine form by grinding, in particular for use in the paint industry, including the following method steps:
preparation of a dispersion containing factice powder as a peroxide crosslinked polymer and a liquid medium, advantageously a paint solvent, in particular butyl acetate,
whereas the dispersion has a solid content of less than 75 % in weight, in particular 50 % in weight to 30 % in weight and whereas the factice powder exhibits an average grain size (Dso) of less than 100 µm, in particular of less than 80 µm,
homogenisation in at least and in particular one homogeniser with respectively a nozzle (3) connected via a multiple realisation of the process through the homogeniser(s) (4) under pressure, in particular at 4 to 800 bars.

2. A process as claimed in Claim 1, **characterised in that** the realisation of said process is repeated by the homogeniser (4) until the average grain size (Dso) of the factice powder is smaller than or equal to 30 µm, in particular smaller than or equal to 10 µm.

3. The method according to one of the previous claims, **characterised in that** the realisation of the process is repeated by the homogeniser (4) until the at least 95 percent of the factice powder mass, in particular the whole factice powder mass, has a grain size smaller than or equal to 30 µm, in particular smaller than or equal to 10 µm, in particular smaller than or equal to 4 µm.

4. The method according to one of the previous claims, **characterised in that** the dispersion during homogenisation, is cooled in particular between the various realisations of the process by the homogeniser(s), in particular following the countercurrent principle.

5. The method according to one of the previous claims, **characterised in that** that the dispersion exclusively consists of the factice powder als a peroxide crosslinked polymer having an average grain size (Dso) of less than 100 µm, in particular of less than 80 µm, and of the liquid medium and advantageously the liquid medium is a (paint) solvent.

6. The method according to one of the previous claims, **characterised in that** the liquid medium is such that it is liquid at a temperature at least between 20 and 100°C.

7. The method according to one of the previous claims, **characterised in that** that the liquid medium is water or an aqueous solution.

8. The method according to one of the previous claims, **characterised in that** the liquid medium consists of paint solvents or paint solvent mixtures.

9. The method according to one of the previous claims, **characterised in that** that the liquid medium consists of binders, binder mixtures or binder solutions.

10. The method according to one of the previous claims, **characterised in that** to prepare the dispersion factice is crushed in a rubber or solid form during a particularly multistage grinding process and then dispersed in the liquid medium.

11. The method according to one of the previous claims 1 to 6, **characterised in that** to prepare the dispersion in the liquid medium, in particular castor oil, in particular starting from an emulsion, in particular a castor oil emulsion, a factice polymerisation is carried out to produce the factice powder, in particular inside a homogeniser (4), in particular in the homogeniser (4).

## Revendications

1. Procédé de fabrication de polymères, en particulier de factice, de préférence à base d'huiles essentielles, de préférence réticulées peroxidiques, sous forme microfine par broyage, en particulier pour application dans l'industrie de la peinture, présentant les phases de procédé suivantes:
préparation d'une dispersion contenant de la poudre factice comme polymère réticulé peroxidique et un milieu liquide, avantageusement un solvant de peinture, en particulier de l'acétate de butyle,
où la dispersion présente une partie solide de moins de 75 % en poids, en particulier de 50 % en poids à 30 % en poids et où la poudre factice présente une granulométrie médiane (Dso) de moins de 100 µm, en particulier de moins de 80 µm,
homogénéisation dans au moins et en particulier un homogénisateur ayant respectivement une buse connectée en amont (3) avec une réalisation de procédé multiple par le ou les homogénisateur(s) (4) sous pression, en particulier à 4 - 800 bars.

2. Procédé selon la revendication 1, **caractérisé en ce que** l'on répète la réalisation du procédé par l'homogénisateur (4) jusqu'à ce l'on obtienne une granulométrie médiane (Dso) de la poudre factice inférieure ou égale à 30 µm, en particulier inférieure ou égale à 10 µm.

3. Procédé selon l'une des revendications précédentes, **caractérisé en ce que** l'on répète la réalisation du procédé par l'homogénisateur (4) jusqu'à ce qu'au moins 95 pourcent de la masse de poudre factice, en particulier toute la masse de poudre factice, présente une granulométrie inférieure ou égale à 30 µm, en particulier inférieure ou égale à 10 µm, en particulier inférieure ou égale à 4 µm.

4. Procédé selon l'une des revendications précédentes, **caractérisé en ce que** l'on refroidit la dispersion pendant l'homogénéisation, en particulier entre les diverses réalisations du procédé par l'homogénisateur ou les homogénisateurs (4), en particulier selon le principe de contrecourant.

5. Procédé selon l'une des revendications précédentes, **caractérisé en ce que** la dispersion se compose exclusivement de la poudre factice comme polymère réticulé peroxidique d'une granulométrie médiane (Dss) de moins de 100 µm, en particulier de moins de 80 µm et du milieu liquide et avantageusement le milieu liquide est un solvant (de peinture).

6. Procédé selon l'une des revendications précédentes, **caractérisé en ce que** le milieu liquide est tel qu'il devient liquide au moins à une température comprise entre 20 et 100°C.

7. Procédé selon l'une des revendications précédentes, **caractérisée en ce que** le milieu liquide est l'eau ou une solution aqueuse.

8. Procédé selon l'une des revendications précédentes, **caractérisé en ce que** le milieu liquide se compose de solvants de peinture ou de mélanges de solvant de peinture.

9. Procédé selon l'une des revendications précédentes, **caractérisé en ce que** le milieu liquide se compose de liants, de mélanges de liants ou de solutions de liants.

10. Procédé selon l'une des revendications précédentes, **caractérisé en ce que** pour préparer la dispersion, on réduit en miettes le factice sous forme de caoutchouc ou solide lors d'une opération de broyage en particuler en plusieurs phases et elle se disperse ensuite dans le milieu liquide.

11. Procédé selon l'une des revendications précédentes 1 à 6, **caractérisé en ce que** pour préparer la dispersion dans le milieu liquide, en particulier de l'huile de ricin, en particulier à partir d'une émulsion, en particulier une émulsion d'huile de ricin, on réalise une polymérisation factice pour constituer la poudre factice, en particulier à l'intérieur d'un homogénisateur (4), en particulier dans l'homogénisateur (4).
